# EUROPEAN PATENT APPLICATION

(11) **EP 3 951 802 A1**
(43) Date of publication of application: **09.02.2022**
(21) Application number: 20760364.8
(22) Date of filing: 13.03.2020
(51) Int. Cl.: H01B 3/30, H01F 5/06, H01B 7/02

(54) **INSULATED WIRE, COIL, AND ELECTRICAL AND ELECTRONIC EQUIPMENT**

(30) Priority: 29.03.2019 JP 2019066642
(71) Applicant: Essex Furukawa Magnet Wire Japan Co., Ltd., Tokyo 101-0047 (JP)
(72) Inventor: TOMIZAWA, Keiichi, Tokyo 1008322 (JP); HARA, Natsuko, Tokyo 1008322 (JP); FUKUDA, Hideo, Tokyo 1008322 (JP)
(74) Representative: Forstmeyer, Dietmar
(86) International application number: PCT/JP2020/011209
(87) International publication number: WO 2020/203192

(57) **Abstract**

An insulated wire, containing a conductor, and an insulating film provided on the periphery of the conductor, in which the insulating film contains a polyimide resin, and the polyimide resin contains the following constituting unit (a) as a tetracarboxylic dianhydride-derived constituting unit and the following constituting unit (b) as a diamine-derived constituting unit, among the constituting units of the polyimide:
(a) a constituting unit having a skeleton derived from pyromellitic anhydride and/or a constituting unit having a skeleton derived from 3,3',4,4'-biphenyltetracarboxylic dianhydride; and
(b) a constituting unit having a skeleton derived from 9,9-bis(4-aminophenyl)fluorene.

## Description

### TECHNICAL FIELD

The present invention relates to an insulated wire, a coil, and an electrical or electronic equipment.

### BACKGROUND ART

In an inverter-related equipment (such as coils for electrical or electronic equipment, including high-speed switching devices, inverter motors, transformers, and the like), an insulated wire (enamel wire), in which an insulating resin covering layer (insulating film) is formed on the periphery of a conductor, is used as a magnet wire. A polyimide resin is widely used as a constituting material of the insulating film of the insulated wire (for example, see Patent Literatures 1 and 2).

In recent years, with the spread of hybrid cars and electric vehicles, improvement of motor efficiency is required, and output improvement by high-voltage motor drive is also required. Due to this improvement in the output of the motor, the amount of heat generated increases, and the maximum temperature of the motor rises to around 150°C.

### CITATION LIST

### PATENT LITERATURES

Patent Literature 1: JP-A-2010-67408 ("JP-A" means unexamined published Japanese patent application)
Patent Literature 2: JP-A-2014-82083

### SUMMARY OF INVENTION

### TECHNICAL PROBLEM

It is known to oil-cool the heat-generated motor using an automatic transmission fluid (ATF) which lubricates both a power transmission and a bearing. The present inventors conducted investigation about the oil cooling. As a result, it has become clear that if the motor using an insulated wire containing a polyimide resin in an insulating film thereof is oil-cooled using the ATF, the insulating film is prone to deterioration and tends to cause a decrease in dielectric breakdown voltage of the wire.

In view of the above, the present invention is contemplated to provide an insulated wire containing a polyimide resin in an insulating film thereof, which is less likely to deteriorate the insulating film, even when exposed to the ATF. Further, the present invention provides to a coil using the insulated wire, and an electrical or electronic equipment using the coil.

### SOLUTION TO PROBLEM

As a result of repeated intensive investigations in consideration of the above-described problems, the present inventors found that the above-described problems can be solved by using, as a constituent material of the insulating film, a polyimide resin having a specific structure as a tetracarboxylic dianhydride-derived constituting unit and also having a specific structure incorporated therein as a diamine-derived constituting unit. The present invention is based on these findings, and the present inventors further conducted investigation, thus completing the present invention.

The problems of the present invention were solved by the following means:
[1] An insulated wire, containing:
   a conductor; and
   an insulating film provided on the periphery of the conductor;
   wherein the insulating film contains a polyimide resin, and
   wherein the polyimide resin contains the following constituting unit (a) as a tetracarboxylic dianhydride-derived constituting unit and the following constituting unit (b) as a diamine-derived constituting unit, among the constituting units of the polyimide:
   (a) a constituting unit having a skeleton derived from pyromellitic anhydride and/or a constituting unit having a skeleton derived from 3,3',4,4'-biphenyltetracarboxylic dianhydride; and
   (b) a constituting unit having a skeleton derived from 9,9-bis(4-aminophenyl)fluorene.
[2] The insulated wire described in the item [1], wherein the ratio of the constituting unit (b) occupied in all of the diamine-derived constituting unit constituting the polyimide is 1 to 30 mol%.
[3] A coil, containing the insulated wire described in the item [1] or [2].
[4] An electrical or electronic equipment, having the coil described in the item [3].

In the description of the present invention, any numerical expressions in a style of "...to..." will be used to indicate a range including the lower and upper limits represented by the numerals given before and after "to", respectively.

### EFFECTS OF INVENTION

The insulated wire of the present invention is less likely to deteriorate an insulating film of the insulated wire, even when exposed to AFT, despite a polyimide resin contained in the insulating film. Further, the coil of the present invention and the electrical or electronic equipment using this coil, in each of which the insulated wire of the present invention is used, are less likely to deteriorate the insulated wire, even when exposed to AFT.

### BRIEF DESCRIPTION OF THE DRAWINGS

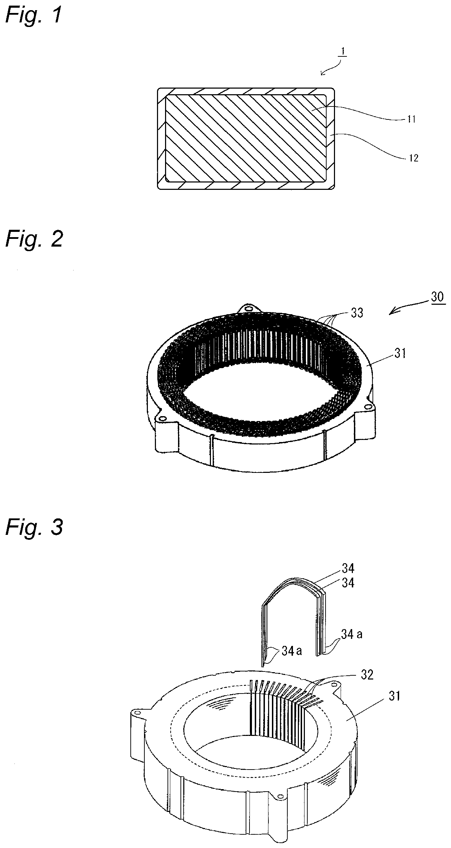

{Fig. 1}
   Fig. 1 is a schematic sectional view showing one embodiment of the insulated wire of the present invention.
{Fig. 2}
   Fig. 2 is a schematic perspective view showing a preferable embodiment of the stator to be used in the electrical or electronic equipment of the present invention.
{Fig. 3}
   Fig. 3 is a schematic exploded perspective view showing a preferable embodiment of the stator to be used in the electrical or electronic equipment of the present invention.

### MODE FOR CARRYING OUT THE INVENTION

### [Insulated wire]

Hereinafter, preferable embodiments of the insulated wire of the present invention are described.

The insulated wire of the present invention has an insulating film 12 containing a polyimide resin having a specific structure described later on the periphery of the conductor 11, as shown in Fig. 1. In the embodiment shown in Fig. 1, as to the conductor 11, its cross-sectional shape is rectangular (flat angular shape). A thickness of the insulating film 12 is set to a range of preferably 1 to 200 µm, more preferably 10 to 100 µm. The insulating film can have a multilayer structure as appropriate.

### <Conductor>

As the conductor to be used in the present invention, use may be made of any usual one that is conventionally used as a conductor of insulated wires, and examples thereof include a metal conductor such as a copper wire and an aluminum wire.

Fig. 1 shows a conductor as having a rectangular cross section (flat angular shape). However, the cross sectional shape of the conductor is not particularly limited, and can be any desired shape such as square, round, or ellipse.

In view of suppressing partial discharge from a corner portion, the rectangular conductor has preferably such a shape that chamfered edges (curvature radius r) are provided at four corners, as shown in Fig. 1. The curvature radius r is preferably 0.6 mm or less, and more preferably in a range from 0.2 to 0.4 mm.

The size of the conductor is not particularly limited. In the case of the rectangular conductor, in the rectangular cross-sectional shape, the width (long side) thereof is preferably from 1 to 5 mm, and more preferably from 1.4 to 4.0 mm, and the thickness (short side) is preferably from 0.4 to 3.0 mm, and more preferably from 0.5 to 2.5 mm. The ratio of length (thickness:width) of the width (long side) and the thickness (short side) is preferably from 1:1 to 1:4. To the contrary, in the case of a conductor whose cross-sectional shape is round, the size is preferably 0.3 to 3.0 mm, and more preferably 0.4 to 2.7 mm in terms of a diameter.

### <Insulating film>

The insulating film 12 is a so-called enamel layer and contains a polyimide resin having a specific structure. The polyimide constituting the insulating film is preferably a thermosetting polyimide.

In the present invention, the polyimide resin contained in the insulating film contains the following constituting unit (a) as a tetracarboxylic dianhydride-derived constituting unit and the following constituting unit (b) as a diamine-derived constituting unit, among the constituting units of the polyimide.
(a) A constituting unit having a skeleton derived from pyromellitic anhydride and/or a constituting unit having a skeleton derived from 3,3',4,4'-biphenyltetracarboxylic dianhydride (hereinafter, also referred to as "Constituting unit (a)"; and among the constituting unit (a), the constituting unit having a skeleton derived from pyromellitic anhydride is referred to as "constituting unit (a1)" and the constituting unit having a skeleton derived from 3,3',4,4'-biphenyltetracarboxylic dianhydride is referred to as "constituting unit (a2)".)
(b) A constituting unit having a skeleton derived from 9,9-bis(4-aminophenyl)fluorene (hereinafter, also referred to as "Constituting unit (b)")

### -Constituting unit (a)-

In the constituting unit (a), "the constituting unit having a skeleton derived from pyromellitic anhydride" (constituting unit (a1)) is a constituting unit having a skeleton represented by the following Formula (2), that is derived by imidization due to intramolecular dehydration cyclization of a polyamic acid obtained by a reaction of a compound having a skeleton represented by the following Formula (1) with a diamine compound. In the present invention, the symbol "*" presented in Formulas designates a linking site for being incorporated into the polyimide chain.

In the present invention, note that the phrase "having a skeleton" means to include, in addition to a structure of the skeleton itself, a structure of the skeleton which further has a substituent to the extent that the effect of the present invention is not impaired. Examples of this substituent include a halogen atom and an alkyl group (preferably an alkyl group having 1 to 5 carbon atoms, and more preferably an alkyl group having 1 to 3 carbon atoms).

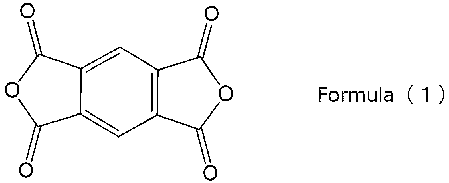

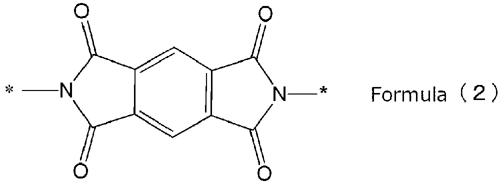

In the constituting unit (a), "the constituting unit having a skeleton derived from 3,3',4,4'-biphenyltetracarboxylic dianhydride" (constituting unit (a2)) is a constituting unit having a skeleton represented by the following Formula (4), that is derived by imidization due to intramolecular dehydration cyclization of a polyamic acid obtained by a reaction of a compound having a skeleton represented by the following Formula (3) with a diamine compound.

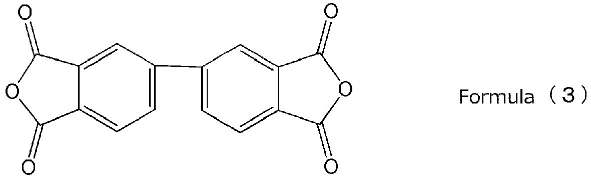

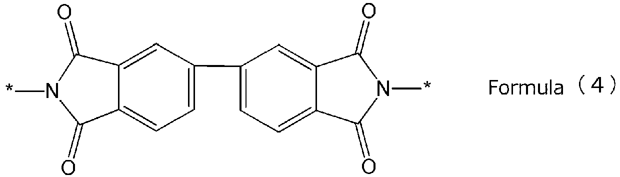

The ratio of the constituting unit (a1) occupied in the constituting unit (a) in the polyimide (the ratio of the total content of the constituting unit (a1) occupied in the total content of the constituting unit (a)) can be set to any desired value in the range of 0 to 100 mol%. The ratio is preferably 20 to 100 mol%, more preferably 20 to 80 mol%, further preferably 30 to 70 mol%, further preferably 40 to 60 mol%, and particularly preferably 45 to 55 mol%.

The ratio of the constituting unit (a2) occupied in the constituting unit (a) in the polyimide (the ratio of the total content of the constituting unit (a2) occupied in the total content of the constituting unit (a)) can be set to any desired value in the range of 0 to 100 mol%. The ratio is preferably 0 to 80 mol%, more preferably 20 to 80 mol%, further preferably 30 to 70 mol%, further preferably 40 to 60 mol%, and particularly preferably 45 to 55 mol%.

The ratio of the constituting unit (a) occupied in all of the tetracarboxylic dianhydride-derived constituting unit in the polyimide (the ratio of the total content of the constituting unit (a) occupied in the total content of the tetracarboxylic dianhydride-derived constituting unit) is preferably 50 mol% or more, more preferably 70 mol% or more. In all of the tetracarboxylic dianhydride-derived constituting units in the polyimide, the structure of the remainder excluding the constituting unit (a) is not particularly limited and a tetracarboxylic dianhydride-derived constituting unit having an aromatic ring is preferable. It is also preferable that all of the tetracarboxylic dianhydride-derived constituting units are the constituting unit (a).

### -Constituting unit (b)-

In the constituting unit (b), "the constituting unit having a skeleton derived from 9,9-bis(4-aminophenyl)fluorene" is a constituting unit having a skeleton represented by the following Formula (6), that is derived by imidization due to intramolecular dehydration cyclization of a polyamic acid obtained by a reaction of a compound having a skeleton represented by the following Formula (5) with a tetracarboxylic dianhydride.

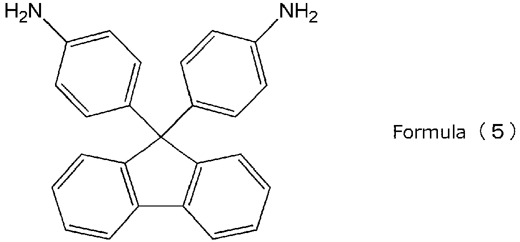

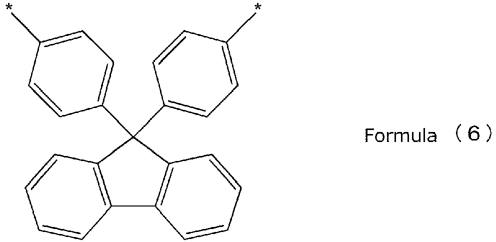

The ratio of the constituting unit (b) occupied in all of the diamine-derived constituting unit in the polyimide (the ratio of the total content of the constituting unit (b) occupied in the total content of the diamine-derived constituting unit) is preferably 1 to 60 mol%, more preferably 1 to 50 mol%, further preferably 1 to 40 mol%, further preferably 1 to 30 mol%, further preferably 1 to 25 mol%, and particularly preferably 1 to 20 mol%. This ratio is preferably 2 to 50 mol%, 4 to 50 mol%, 6 to 40 mol%, 7 to 30 mol%, 8 to 25 mol%, or 8 to 20 mol%.

In all of the diamine-derived constituting units in the polyimide, the structure of the remainder excluding the constituting unit (b) is not particularly limited and a diamine-derived constituting unit having an aromatic ring is preferable. The diamine-derived constituting unit has preferably an ether bond, more preferably a diphenyl ether skeleton, and further preferably a diphenyl ether ether structure. Preferred examples of such a "diamine-derived constituting unit having an aromatic ring" include constituting units having a skeleton selected from the following ones (such as a constituting unit having a skeleton derived from diaminophenyl ether (ODA), and a constituting unit having a skeleton derived from 2,2-bis[4-(4-aminophenoxy)phenyl]propane (BAPP)).

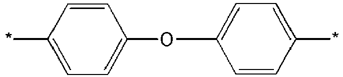

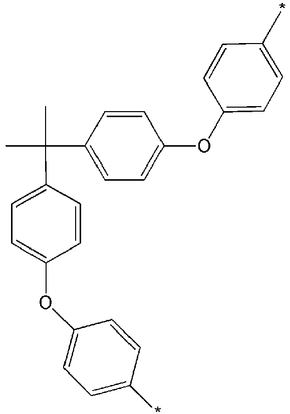

It is preferable that, in the polyimide, all of the diamine-derived constituting units have an aromatic ring, and all of the tetracarboxylic dianhydride-derived constituting units have an aromatic ring.

The constituting unit (a) is preferably a constituting unit derived from pyromellitic anhydride and/or a constituting unit derived from 3,3',4,4'-biphenyltetracarboxylic dianhydride.

The constituting unit (b) is preferably a constituting unit derived from 9,9-bis(4-aminophenyl)fluorene.

In the insulated wire of the present invention, the polyimide resin is contained in the insulating film in an amount of preferably 50 mass% or more, more preferably 70 mass% or more, and further preferably 80 mass% or more. When the insulating film has a multilayer structure, the polyimide resin is contained in the entire multilayer in an amount of 50 mass% or more, more preferably 70 mass% or more, and further preferably 80 mass% or more.

In the above-described insulating film, various kinds of additives can be contained. Examples of such an additive include a cell nucleating agent, an antioxidant, an antistatic agent, an ultraviolet inhibitor, a light stabilizer, a fluorescent brightening agent, a pigment, a dye, a compatibilizing agent, a lubricating agent, a reinforcing agent, a flame retardant, a crosslinking agent, a crosslinking aid, a plasticizer, a thickener, a thinning agent, an elastomer, and the like. These additives may be derived from the polyimide resin, or may be added separately.

The polyimide resin constituting the insulating film of the insulated wire according to the present invention has a glass transition temperature of preferably 230°C or more, more preferably 250°C or more, and further preferably 270°C or more. The upper limit of the glass transition temperature is not particularly limited, and it is usually 350°C or less. The glass transition temperature is determined by the method described in Examples below.

The polyimide resin constituting the insulating film of the insulated wire according to the present invention has a 5% weight loss temperature of 350°C or more, more preferably 370°C or more, and further preferably 390°C or more. The upper limit of the 5% weight loss temperature is not particularly limited, and it is usually 600°C or less. The 5% weight loss temperature is determined by the method described in Examples below.

### [Method of producing insulated wire]

In the method of producing the insulated wire of the present invention (also referred to as "the production method of the present invention"), the insulated wire can be formed by coating, on the periphery of the conductor, a varnish containing both a polyamic acid that is a precursor of the above-described polyimide resin and an organic solvent dissolving the polyamic acid, and then subjecting the polyamic acid to a dehydration cyclization by baking. By this baking, the solvent in the varnish is volatilized and removed. Examples of the organic solvent include: amide-based solvents, such as N-methyl-2-pyrrolidone (NMP), N,N-dimethylacetamide (DMAC), and N,N-dimethylformamide (DMF); urea-based solvents, such as N,N-dimethylethyleneurea, N,N-dimethylpropyleneurea, and tetramethylurea; lactone-based solvents, such as γ-butyrolactone and γ-caprolactone; carbonate-based solvents, such as propylene carbonate; ketone-based solvents, such as methyl ethyl ketone, methyl isobutyl ketone, and cyclohexanone; ester-based solvents, such as ethyl acetate, n-butyl acetate, butyl cellosolve acetate, butyl carbitol acetate, ethyl cellosolve acetate, and ethyl carbitol acetate; glyme-based solvents, such as diglyme, triglyme, and tetraglyme; hydrocarbon-based solvents, such as toluene, xylene, and cyclohexane; phenol-based solvents, such as cresol, phenol, and halogenated phenol; sulfone-based solvents, such as sulfolane; and dimethylsulfoxide (DMSO).

In the present invention, the phrase "periphery of a conductor" not only means the outer periphery of the conductor, but also means, when the conductor is covered with a layer, to include the outer periphery of the layer.

The insulating film may be constituted by one layer, or may be multi-structured by repeating coating and baking multiple times. Further, it is also possible to form an insulating film that does not contain the above-described polyimide resin on the periphery of the conductor, and then to form an insulating film containing the above-described polyimide resin on the periphery of the insulating film. Further, it is also possible to form an insulating film containing the above-described polyimide resin on the periphery of the conductor, and then to form an insulating film that does not contain the above-described polyimide resin on the periphery of the insulating film.

Coating of the varnish onto the periphery of the conductor can be carried out in the usual manner. Examples thereof include a method of using a varnish-coating die having a similar shape to the cross-sectional shape of the conductor, and when the cross-sectional shape of the conductor is rectangular, a method of using a die that is called as "Universal die" formed in the grid shape.

The baking after the insulating coating is coated can be performed by an ordinary method. For example, the baking can be performed in a baking furnace. The baking conditions in this case depend on the shape and the like of the furnace to be used and cannot be unambiguously decided. In the case where the furnace is a natural convection vertical furnace of about 10 m, for example, the conditions are at the furnace temperature of 400 to 650°C and the transit time of from 10 to 90 sec.

### [Coil, and Electrical or Electronic Equipment]

The insulated wire of the present invention is applicable to a field which requires electrical properties (resistance to voltage) and heat resistance, such as various kinds of electrical or electronic equipment, as a coil. For example, the insulated wire of the present invention is used for a motor, a transformer and the like, which can compose a high-performance electrical or electronic equipment. In particular, the insulated wire is preferably used as a winding wire for a driving motor of hybrid vehicle (HV) and electrical vehicle (EV). As descried above, according to the present invention, it is possible to provide an electrical or electronic equipment using the insulated wire of the present invention as a coil, in particular a driving motor of HV and EV.

The coil of the present invention is not particularly limited, as long as it has a form suitable for any of various kinds of electrical or electronic equipment, and examples thereof include: items formed by a coil processing of the insulated wire of the present invention, and items formed by electrically connecting prescribed parts after bending the insulated wire of the present invention.

The coils formed by coil processing of the insulated wire of the present invention are not particularly limited, and examples thereof include a roll formed by spirally winding around a long insulated wire. In these coils, the number of winding wires or the like of the insulated wire is not particularly limited. Ordinarily, in winding around the insulated wire, use may be made of an iron core, or the like.

Example of the coils formed by electrically connecting prescribed parts after bending the insulated wire of the present invention include coils used in stators for rotating electrical machines or the like. Examples of these coils include a coil 33 (see Fig. 2) prepared by, as shown in Fig. 3, cutting the insulated wire of the present invention in a prescribed length, and then bending them in the U-shaped form or the like, thereby preparing a plurality of wire segments 34, and then alternately connecting two open ends (terminals) 34a in the U-shaped form or the like of each wire segment 34.

The electrical or electronic equipment formed by using this coil is not particularly limited, and examples of one preferable embodiment of such electrical or electronic equipment include a transformer, and a rotating electric machine equipped with a stator 30 shown in Fig. 2 (in particular, driving motors of HV and EV). This rotating electric machine can be made in the same constitution as the conventional one, except for equipment of the stator 30.

The stator 30 can be made in the same constitution as the conventional one, except that its wire segment 34 is formed by the insulated wire of the present invention. Specifically, the stator 30 has a stator core 31, and a coil 33 in which, as shown in such as Fig. 2, the wire segments 34 formed of the insulated wire of the present invention are incorporated in a slot 32 of the stator core 31 and open ends 34a are electrically connected. This coil 33 is in the fixed state such that adjacent fusing layers, or the fusing layer and the slot 32 are firmly fixed. Herein, the wire segment 34 may be incorporated in the slot 32 with one segment. However, it is preferable that as shown in Fig. 3, two segments are incorporated in pairs. In this stator 30, the coil 33 formed by alternately connecting the open ends 34a that are two ends of the wire segments 34 which have been bent as described above, is incorporated in the slot 32 of the stator core 31. In this time, the wire segment 34 may be incorporated in the slot 32 after connecting the open ends 34a thereof. Alternatively, after incorporating the wire segment 34 in the slot 32, the open ends 34a of the wire segment 34 may be bent, thereby to connect them.

The present invention will be described in more detail based on examples given below, but the invention is not meant to be limited by these.

### EXAMPLES

### [Production Example] Production of insulated wire

### <Conductor>

A copper wire with a circular cross section (outer diameter of the cross section: 1 mm) was used as the conductor.

### <Polyimide resin coating (insulating coating)>

The diamine shown in the following Table was dissolved in NMP. The tetracarboxylic acid dianhydride shown in the following Table was added to this solution, and the resultant was stirred under a nitrogen atmosphere to obtain a polyimide resin coating.

### <Insulated wire>

A coating film was formed by setting a dice so that the dried film thickness is 5 µm, and then coating the polyimide resin coating on the periphery of the above-described conductor.

Baking was performed at 520°C for a transit time of 10 to 20 seconds in a hot-air circulating vertical furnace having a height of about 10 m. This coating and baking was repeated 6 times to obtain an insulated wire with an insulating film thickness of 30 µm.

### [Test Example 1] Glass transition temperature (Tg)

The above-prepared polyimide resin coating was used to produce a film having a size of 30 mm × 5 mm, and the elastic modulus of the film was measured by using a dynamic viscoelastic device (trade name: DVA-200, manufactured by IT Measurement Control Co., Ltd.) in the temperature range from room temperature to 400°C under the conditions of frequency 10Hz and temperature rising rate of 3°C/min. The inflection point of the elastic modulus was defined as the glass transition temperature (°C).

The results are shown in the following Table.

### [Test Example 2] 5% weight loss temperature

A film with a weight of 10 mg was made by using the above-prepared polyimide resin coating. This film was put in a platinum sample pan and a thermal analysis was conducted ranging from room temperature to 800°C under the conditions of flow rate: 100 mL/min and rate of temperature increase: 10°C/min in air by using a thermogravimetric differential thermal analyzer (trade name: TG/DTA320, manufactured by Seiko Instrument Inc.). The temperature at which the film weight decreased by 5% (the temperature at which the film weight became 9.5 mg) was defined as the 5% weight loss temperature.

The results are shown in the following Table.

### [Test Example 3] Flexibility

The insulated wire produced as described above was elongated in conformity to JIS C 3216:2011. The insulated wire elongated in this way was wound around a winding stick having the same diameter as the conductor of the insulated wire in conformity to JIS C 3216:2011 to examine a presence or an absence of breakage and cracks (presence or absence of defects) of the insulating film by an optical microscopic observation. Evaluation of flexibility was conducted in a manner such that the case where even when the insulated wire was elongated by 40% thereof, any defects were not developed in the insulating film was rated as "⊚", the case where although defects were developed in the insulating film, when the insulated wire was elongated by 40% thereof, any defects were not developed in the insulating film when the insulated wire was elongated by 20% thereof was rated as "○", and the case where defects were developed in the insulating film when the insulated wire was elongated by 20% thereof was rated as "x".

The results are shown in the following Table.

### [Test Example 4] ATF Resistance

In a pressure-resistant container having an internal capacity of 2000 mL, an AFT oil (trade name: AUTO FLUID WS, manufactured by TOYOTA MOTOR CORPORATION) and the insulated twisted pair wire produced as described above were put and the insulated wire was immersed in the ATF. The container was sealed and the insulated wire was subjected to a thermal treatment at 150°C for 1000 hours and then, the insulated wire was taken out to measure a dielectric breakdown voltage.

The dielectric breakdown voltage was measured according to a twisted pair method. Specifically, with two of any of the insulated wires that were twisted together, an alternating current voltage with sine wave at frequency 50 Hz was applied between the conductors. While the voltage was continuously increased, the voltage (effective value) at which the dielectric breakdown occurred, was measured.

As a retention of the dielectric breakdown voltage, 100 × B/A(%) was calculated, provided that the value of the dielectric breakdown voltage before putting the ATF is designated as A and the value of the dielectric breakdown voltage after putting the ATF is designated as B.

The results are shown in the following Table.

{0045}

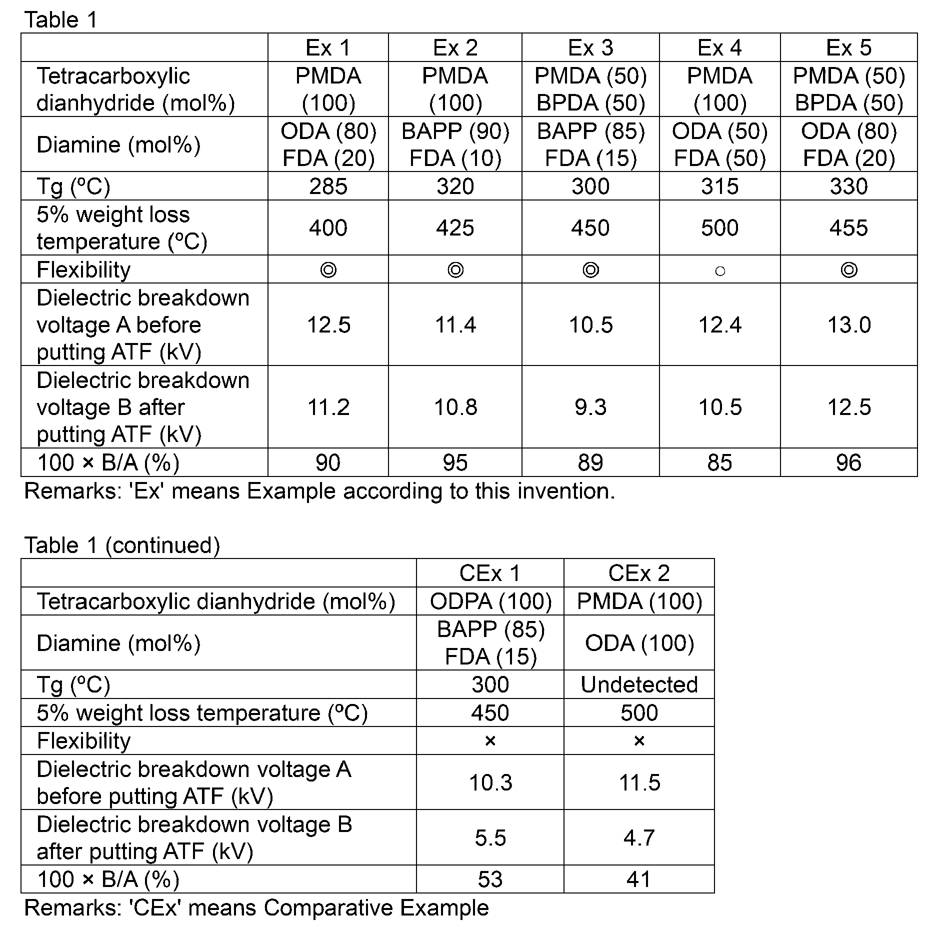

In the above table, the number in parentheses attendant on "tetracarboxylic dianhydride" is a percentage (mol%) of the tetracarboxylic dianhydride in the total of tetracarboxylic dianhydride used as a raw material for the polyimide, and the number in parentheses attendant on "diamine" is a percentage (mol%) of the diamine in the total of diamine-derived constituting units used as a raw material for the polyimide. Further, abbreviated expressions in the table are explained below.
- PMDA: pyromellitic anhydride
- BPDA: 3,3',4,4'-biphenyltetracarboxylic dianhydride
- ODPA: 4,4'-oxydiphthalic anhydride
- ODA: diaminophenyl ether
- FDA: 9,9-bis(4-aminophenyl)fluorene
- BAPP: 2,2-bis[4-(4-aminophenoxy)phenyl]propane

As is shown in the above table, in a case where the insulating film-constituting polyimide contained no constituting unit (a) as a tetracarboxylic dianhydride-derived constituting unit, the result was inferior in ATF-resistant characteristics, even when the constituting unit (b) was contained as a diamine-derived constituting unit (Comparative Example 1). Also, in a case where even when the insulating film-constituting polyimide contained the constituting unit (a) as a tetracarboxylic dianhydride-derived constituting unit, the constituting unit (b) was not contained as a diamine-derived constituting unit, the result was inferior in ATF-resistant characteristics (Comparative Example 2).

To the contrary, when the polyimide resin constituting the insulating film contained the constituting unit (a) as a tetracarboxylic dianhydride-derived constituting unit and the constituting unit (b) as a diamine-derived constituting unit (Examples 1 to 5), the ATF resistance could be significantly improved.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2019-066642 filed in Japan on March 29, 2019, which is entirely herein incorporated by reference.

### REFERENCE SIGNS LIST

- 1: Insulated wire
- 11: Conductor
- 12: Insulating film (single layer, multilayer)
- 30: Stator
- 31: Stator core
- 32: Slot
- 33: Coil
- 34: Wire segment
- 34a: Open end

## Claims

1. An insulated wire, comprising:
a conductor; and
an insulating film provided on the periphery of the conductor;
wherein the insulating film comprises a polyimide resin, and
wherein the polyimide resin comprises the following constituting unit (a) as a tetracarboxylic dianhydride-derived constituting unit and the following constituting unit (b) as a diamine-derived constituting unit, among the constituting units of the polyimide:
(a) a constituting unit having a skeleton derived from pyromellitic anhydride and/or a constituting unit having a skeleton derived from 3,3',4,4'-biphenyltetracarboxylic dianhydride; and
(b) a constituting unit having a skeleton derived from 9,9-bis(4-aminophenyl)fluorene.

2. The insulated wire according to Claim 1, wherein the ratio of the constituting unit (b) occupied in all of the diamine-derived constituting unit constituting the polyimide is 1 to 30 mol%.

3. A coil, comprising the insulated wire according to Claim 1 or 2.

4. An electrical or electronic equipment, comprising the coil according to Claim 3.
